# EUROPÄISCHE PATENTANMELDUNG

(11) **EP 4 810 739 A1**
(43) Veröffentlichungstag der Anmeldung: **23.09.2026**
(21) Anmeldenummer: 25165390.3
(22) Anmeldetag: 21.03.2025
(51) Int. Cl.: E04D 1/20, E04D 1/30, H02S 20/25, F24S 25/61

(54) **KUNSTSTOFF-DACHZIEGEL UND VERFAHREN ZU DESSEN HERSTELLUNG UND VERWENDUNG DES KUNSTSTOFF-DACHZIEGELS UND VERFAHREN ZUR BEREITSTELLUNG EINES STAPELS AUS KUNSTSTOFF-DACHZIEGELN**

(71) Anmelder: Jalet, Jacky Denis, 79856 Hinterzarten (DE)
(72) Erfinder: Jalet, Jacky Denis, 79856 Hinterzarten (DE)

(57) **Zusammenfassung**

Ein Kunststoff-Dachziegel (1, 1', 1") umfassend einen monolithischen spritzgegossenen plattenförmigen Kunststoffkörper, welcher zu mehr 80 Gew.% aus einem thermoplastischen Polymer gebildet ist, sowie ein Verfahren zu dessen Herstellung, eine Verwendung der Dachziegel und ein Verfahren zur Bereitstellung eines Stapels aus Kunststoff-Dachziegel.

## Beschreibung

Die vorliegende Erfindung betrifft einen Kunststoff-Dachziegel, eine Verwendung dieser Kunststoff-Dachziegel und ein Verfahren zu dessen Herstellung und ein Verfahren zur Bereitstellung eines Stapels aus Kunststoff-Dachziegeln.

Herkömmlicherweise werden im industriellen Ländern Dachziegel aus gebranntem Ton zum Abdecken von Dächern eingesetzt. Bei der Montage von Photovoltaikmodule oder Solarmodule, nachfolgend auch verkürzt als Module beschrieben, auf dem Dach müssen üblicherweise einzelne Ziegel entnommen und bearbeitet werden, um ein Montagesystem auf der Dachlattung festzulegen und an dem Ziegel vorbeizuführen.

Die Ziegelbearbeitung ist zeitaufwendig, benötigt handwerkliches Geschick und kann aufgrund des Gewichts und der dafür benötigten Maschinen. Überdies ergibt sich ggf. auch ein Dichtigkeitsproblem, da die Ziegel oftmals einsatzbedingt geschädigt werden, wobei sich diese Schäden durch Frosteinwirkung intensivieren.

Je nach Dachaufbau und Lastverteilung der darauf festgelegten Module kann es dabei zu einem Zerbrechen der Ziegel kommen. In vielen Fällen ist in solchen Fällen eine Anschaffung gleichwertiger passender Ziegel nicht ohne Weiteres möglich.

Die EP 1 260 649 A2 offenbart einen Ziegel aus einem Kunststoff mit großen Anteilen eines anorganischen Füllstoffs. Der anorganische Füllstoff erhöht das Gewicht des Ziegels um ein Vielfaches, wird allerdings benötigt um einen Ziegel in Naturoptik bereitzustellen. Ziel dieser Anmeldung ist es die Nachahmung von Holzschindeln zu erreichen. Zugleich erhöhen die hohen Anteile an anorganischen Füllstoff die Bruchgefahr des Dachziegels bei dessen mechanischer Bearbeitung.

Die DE 10 2004 012 963 A1 offenbart eine Verbundschindel aus einer Elastomerplatte und einer Adhäsiv-Beschichtung. Dieser Aufbau entspricht dem einer verklebten Dachpappe und nicht dem Grundaufbau eines Dachziegels, welcher üblicherweise an einer Dachlattung eingehängt wird.

Die DE 20 2009 004 293 A1 offenbart eine weitere Verbundschindel mit einem Anteil von über 50% aus Papiermaterial und mind. 5% Kunststoffanteil, mutmaßlich als Bindemittel. Dies entspricht allerdings nicht der Definition eines Kunststoff-Dachziegel im Sinne der vorliegenden Anmeldung. Das Material ist in einer bevorzugten Ausführung dieses Dokuments mit einer wasserdichten Folie laminiert. Nach diesseitiger Auffassung ist die Folie bei dieser Art einer Schindel sogar zwingend notwendig.

Die WO 2018/154427 A1 offenbart sodann ein Verbundmaterial aus einem Substrat und einer Dekormaterialschicht. Schichtweise Verbundmaterialien benötigten für einen Dauergebrauch bei verschiedenen Witterungsverhältnissen eine annähernd perfekte Abstimmung der Längsausdehnungskoeffizienten beider Schichten. Die Deckschicht darf nicht durch Nässe unterwandert werden und zugleich muss die mechanische Stabilität gegen Abrieb gewährleistet sein. Unter Berücksichtigung der initial aufgeführten Aufgabe einer Lastaufnahme von Photovoltaikmodulen sollte auch eine hohe Stabilität für die Abstützung gewährleistet sein. Bei Druckbelastung darf es somit nicht zu einem Abplatzen der Dekorschicht oder zu einer Lockerung der Fixierung der Module durch übermäßiges Spiel aufgrund des Abtrags der Dekorschicht kommen. Die vorbeschriebenen lagenweise aufgebauten Verbundwerkstoffe werden üblicherweise bei erhöhten Temperaturen miteinander verpresst. Auch die WO 2018/154427 A1 offenbart gemäß Anspruch 1 eine temperatur-kontrollierte Verpressung mit Drücken jenseits von 4 bar. Das Herstellverfahren solcher Verbundmaterialien ist sehr aufwendig, um der grundsätzlichen Gefahr einer Delaminierung entgegenzuwirken. Dabei werden zumeist Kleber und Harze bei der Herstellung eingesetzt.

Ausgehend von dieser Grundbetrachtung ist es daher Aufgabe der vorliegenden Erfindung einen Kunststoff-Dachziegel bereitzustellen, welcher sich als geeigneter Ersatz eines Bestandsziegels an der Montageposition eines Moduls dient.

Ein entsprechender Dachziegel sollte einfach herstellbar und für die Handhabung auf dem Dach möglichst leicht ausgebildet sein. Darüber hinaus sollte er eine Auflage von Nachbarziegel gewährleisten und zugleich eine hinreichende Stabilität zur Abstützung eines entsprechenden Moduls, also eines Solarmoduls oder eines Photovoltaikmoduls.

Die Erfindung löst diese Aufgabe durch das Bereitstellen eines Kunststoff-Dachziegels mit den Merkmalen des Anspruchs 1.

Ein erfindungsgemäßer Kunststoff-Dachziegel umfasst einen monolithischen spritzgegossenen plattenförmigen Kunststoffkörper oder ist als monolithischer spritzgegossener plattenförmiger Kunststoffkörper ausgebildet. Der besagte Kunststoffkörper ist zu mehr 80 Gew.% aus einem thermoplastischen Polymer gebildet. In der Variante, in welcher der Dachziegel den vorgenannten spritzgegossenen Kunststoffkörper umfasst, kann der Kunststoffkörper z.B. als ein Träger für weitere Materiallagen ausgebildet sein oder es können weitere mechanische Elemente z.B. eine metallische Fixierleiste zum Einhaken an einer Dachlattung oder Vorsprünge zur Stapelung an dem Träger fixiert sein.

Der Kunststoffkörper kann vorzugsweise füllstofffrei und/oder armierungsfrei ausgebildet sein. Weitere Inhaltsstoffe, wie z.B. Farbstoffe, sind vorzugsweise derart ausgewählt, dass der Kunststoff-Dachziegel zu 100% recyclerbar ist.

Zugleich sind die Inhaltsstoffe hinsichtlich ihrer UV-Beständigkeit ausgewählt. Besonders bevorzugt als thermoplastisches Polymer ist eine Polyolefin-Verbindung und besonders bevorzugt Polyethylen oder Polypropylen.

Insgesamt ist der Kunststoff-Dachziegel unkompliziert herstellbar. Aufgrund des geringen Gewichts sind derart leichte Dachziegel eigentlich im Vergleich zu Tonziegeln oder dergleichen von Nachteil, insbesondere Auftreten von Wind.

Allerdings sind Kunststoff-Dachziegel bei bestimmten Anwendungen, z.B. zur Abstützung von Dachmodulen, aufgrund ihrer Bruchstabilität und aufgrund einer in der Herstellung einstellbaren Biegestabilität gegenüber konventionellen Dachziegeln aus anorganischem Material deutlich von Vorteil. Eine Montage vor Ort auf dem Dach ist u.a. aufgrund des wesentlich geringeren Gewichts und der Bearbeitbarkeit erheblich erleichtert und die Möglichkeit des Nachrüstens von Bestandsimmobilien mit Modulen ist wesentlich vereinfacht.

Vorteilhafte Ausgestaltungen der Erfindung sind Gegenstand der Unteransprüche.

Der Kunststoffkörper kann einen Mittelbereich mit einer Biegeversteifung zur Erhöhung der Biegesteifigkeit senkrecht zur Längsrichtung des Kunststoff-Dachziegels aufweisen, wodurch eine bessere Abstützung erreicht wird. Die Ausgestaltung der Biegeversteifung kann mit dem Modulgewicht variieren. Es kann u.a. aus mehreren biegeversteifenden Geometrien ausgewählt werden.

Die vorgenannte Biegeversteifung kann nicht leistenförmige Vorsprünge in Parallelerstreckung zur Längsachse erreicht werden, sondern über Elemente die sich schräg, insbesondere senkrecht, entlang des Kunststoff-Dachziegels erstrecken. Da benachbarte Dachziegel als auch Module überwiegend in Längserstreckung auf dem Kunststoff-Dachziegel aufliegen, wird durch die Biegeversteifung ein mittiges Durchbiegen des Kunststoff-Dachziegels zu verhindern.

Der Mittelbereich weist allseitig zumindest 30 mm, vorzugsweise mehr als 70 mm, Abstand von einer Kante des Dachziegels auf. Endständige Fixier- oder Hakenleisten sind somit nicht Teil der vorgenannten Biegeversteifung.

Darüber hinaus ist es von Vorteil, wenn der Kunststoff-Dachziegel randseitig zum Mittelbereich zumindest einen, vorzugsweise zwei, parallel zur Längsachse des Dachziegels angeordnete Auflagebereiche zur zumindest bereichsweisen Auflage und Überdeckung von benachbarten Ziegeln aufweist, welche jeweils durch eine Trennleiste gegenüber dem Mittelbereich abgegrenzt ist. Die Auflagebereiche sind vorzugsweise als ebene Fläche ausgebildet um eine flächige Auflage bereitzustellen. Eine biegeversteifende Struktur, wie sie im Mittelbereich vorgesehen ist, würde eine punktuelle Auflage bedeuten und damit eine erhöhte mechanische Belastung der Oberfläche bei Bewegung der aufliegenden Ziegel auf der Oberfläche unter Windlast und bei hoher Sonneneinstrahlung.

Es ist überdies von Vorteil, wenn der jeweilige Auflagebereich als rinnenförmiger Ablaufkanal ausgebildet ist, welcher durch die Trennleiste und eine randseitige leistenförmige Kante begrenzt ist. Dieser breite Ablaufkanal ermöglicht ein schnelles und effizientes Ableiten von Regen- und Schmelzwasser aus dem Überdeckungsbereich.

Der Kunststoff-Dachziegel ist vergleichsweise dünn und damit leicht. Der minimale Abstand zwischen einer Sichtseite und einer Rückseite des Dachziegels beträgt weniger als 9 mm, vorzugsweise weniger als 5 mm, besonders bevorzugt zwischen 2-4 mm, weiter bevorzugt zwischen 2,4-3,5 mm.

Darüber hinaus kann der Mittelbereich als Sichtbereich der Sichtseite ausgebildet sein.

Die Biegeversteifung kann optisch wahrnehmbar im Mittelbereich der Sichtseite, z.B. als Versteifungsbögen oder dergleichen, angeordnet sein. Die Biegeversteifung ist somit zugleich ein Designelement des Dachziegels.

Der Kunststoff-Dachziegel ist insbesondere beschichtungsfrei ausgebildet. Diese Definition umfasst auch eine Lackschicht. Beschichtungssysteme für Langzeit-Außenanwendungen von Kunststoffen mit gleichzeitiger Wärmeausdehnung des Substrats und des Beschichtungsmaterials unter Sonneneinstrahlung bei gleichzeitigem UV-Schutz und Schutz vor Unterwanderung der Beschichtung durch Wasser, sowie abrasiver Belastung im Auflagebereich ist auf ökologischem Weg nur begrenzt oder gar nicht realisierbar. Es ist hingegen bevorzugte Ausgestaltung der Erfindung einen zu 100% rezyklierbaren Kunststoff-Dachziegel, also einen Öko-Ziegel, bereitzustellen, was bei beschichteten Kunststoffsystemen unter den vorgenannten Randbedingungen nicht realisierbar ist.

Der Kunststoff-Dachziegel kann überdies entlang einer Rückseite eine Fixierleiste zum Einhaken an einer Dachlattung aufweisen, um eine Fixierung vergleichbar zu konventionellen Dachziegeln zu ermöglichen.

Zusätzlich kann der Dachziegel Löcher für eine Verschraubung, Vernietung oder eine andere Form der Fixierung unter Einsatz mechanischer Verbindungsmittel aufweisen. Eine solche Fixierungsvariante, welche bei konventionellen Dachziegeln aus Ton, Schiefer oder dergleichen nicht realisierbar ist.

Der Kunststoff-Dachziegel kann entlang der Rückseite zumindest einen Vorsprung, vorzugsweise mehrere Vorsprünge entlang einer ersten Achse und zumindest einen zweiten Vorsprung, vorzugsweise mehrere Vorsprünge entlang einer zweiten Achse aufweist, wo-bei die erste Achse und die zweite Achse parallel zueinander und parallel zur Längsachse des Kunststoff-Dachziegels angeordnet sind. Diese Vorsprünge können turm- oder leistenartig ausgebildet sein und ermöglichen eine zusätzlichen Transportsicherung bei stapelweiser Anordnung mehrerer Kunststoff-Dachziegel.

Weiterhin bevorzugt kann der Kunststoff-Dachziegel einen Versteifungsbogen als Teil einer Biegeversteifung und/oder eine Anordnung aus mehreren nebeneinander angeordneten Zellen als Teil einer Biegeversteifung aufweisen. Dabei kann besonders bevorzugt eine erste Biegeversteifung, z.B. eine Mehrzahl aus Versteifungsbögen, entlang der Sichtseite angeordnet sein und eine zweite Biegeversteifung z.B. eine Anordnung aus Zellen, vorzugsweise aus Hohlkammerzellen, insbesondere als Bienenwaben, kann entlang der Rückseite angeordnet sein.

Weiterhin bevorzugt kann der Kunststoff-Dachziegel zumindest eine Dichtnut zur Einlage eines Dichtbandes aufweisen. Das Dichtband kann als ein sogenanntes Kompriband bzw. als komprimierbares Dichtungsband, ausgebildet sein.

Das Kompriband kann als Schaumband ausgebildet sein und kann auf mehr als 30 mm, vorzugsweise auf etwa 40 mm aufquellen. Eine entsprechende Anordnung aus Kunststoffziegel und Kompriband ist dabei selbstverständlich auch erfindungsgemäß.

Wie bereits erörtert, kann das thermoplastische Polymer zumindest zu 30 Gew.% einen rezyklierten Kunststoff aufweisen. Besonders bevorzugt kann der Dachziegel besonders bevorzugt zu mehr als 99 Gew.% aus einem rezyklierten Kunststoffmaterial bestehen. Dies ist besonders ressourcenschonend.

Besonders bevorzugt kann Dachziegel zu 100 Gew.% aus einem rezyklierbaren Kunststoffmaterial ausgebildet sein, so dass eine unkomplizierte und zugleich nachhaltige Entsorgung ermöglicht wird. Andere Dachbeläge müssen zumeist aufwendig entsorgt werden. Beispielsweise gehören Bitumenbahnen und Dachpappe in den Sondermüll.

Erfindungsgemäß ist die Verwendung des erfindungsgemäßen Kunststoff-Dachziegels als Teil einer Fixierungsvorrichtung zur Festlegung eines Photovoltaikmodul und/oder eines Solarmoduls auf einem Dach. Da ein solches Modul an zumindest 4 Ankerpunkten festgelegt wird, sind auch 4 oder mehr Kunststoff-Dachziegel notwendig. Während bei dieser Anwendung bei konventionellen Dachziegeln eine erhöhte Bruchgefahr besteht und die Bearbeitung bereits aufgrund des erhöhten Gewichts schwierig ist, so bietet der erfindungsgemäße Kunststoff-Dachziegel eine leichte Handhabung auf dem Dach aufgrund des geringen Eigengewichts, eine gute Bearbeitbarkeit durch Werkzeug und durch die Möglichkeit der Einfärbung z.B. in anthrazit oder ziegelrot eine optisch an das Dach angepasste Erscheinung im Vergleich zu alternativen Fixierelementen, wie z.B. Metallblechen.

Dabei wird der Kunststoff-Dachziegel bevorzugt lediglich als 3-dimensionaler biegesteifer Ersatzziegel für eine bestehende Dachdeckung aus konventionellen Ziegeln, insbesondere Tonziegeln, eingesetzt. Im Ergebnis weist die Dachdeckung überwiegend konventionelle Dachziegel und lediglich an ausgesuchten Stellen aus den erfindungsgemäßen Kunststoff-Dachziegeln.

Weiterhin erfindungsgemäß ist ein Verfahren zur Herstellung eines Kunststoff-Dachziegels, vorzugsweise eines vorbeschriebenen erfindungsgemäßen Kunststoff-Dachziegels wobei der Kunststoff-Dachziegel in einem einstufigen Spritzguss-Prozess hergestellt wird.

Der Kunststoff-Dachziegel kann besonders zeiteffizient ohne jede Nachbehandlung ausschließlich durch den einstufigen Spritzguss, also in einem Spritzgussschritt, bereitgestellt werden. Dies ist insbesondere ein technisch unkomplizierter Einkomponenten-Spritzguss realisiert. Es ist auch möglich einen Spritzguss mit mehreren Formennester bzw. Kavitäten nebeneinander zu realisieren. So können z.B. vier oder mehr Kunststoff-Dachziegel zeitgleich hergestellt werden.

Ein verkaufsfertiges erfindungsgemäßes Produkt kann ein einzelner Dachziegel oder besonders bevorzugt ein Stapel aus mehreren übereinander angeordneten Kunststoff-Dachziegeln sein, welche unverpackt durch ein Band zusammengehalten werden. Der Stapel kann z.B. auf einer Europlatte an einen Endkunden oder einen Baumarkt ausgeliefert werden.

Ein entsprechend erweitertes erfindungsgemäßes Verfahren zur Bereitstellung eines Stapels aus Kunststoff-Dachziegeln, insbesondere aus den vorgenannten erfindungsgemäßen Kunststoff-Dachziegeln, besteht ausschließlich aus den Schritten:
A Spritzgießen der Kunststoff-Dachziegel
B Stapeln der Kunststoff-Dachziegel und
C Bündeln der Kunststoff-Dachziegel

In einer bevorzugten Ausführungsvariante kann der Kunststoff-Dachziegel als sogenannter Biberschwanz-Ziegel ausgebildet sein.

Besonders bevorzugt kann der Kunststoff-Dachziegel teilweise oder vollständig durch ein rezykliertes Kunststoffmaterial hergestellt sein, so dass die Herstellung des Kunststoff-Dachziegels Bestandteil eines C2C-Kreislaufverfahren (cradle to cradle) sein kann.

Nachfolgend wird die Erfindung anhand mehrerer Ausführungsvarianten und unter Zuhilfenahme der beiliegenden Figuren näher erläutert. Es zeigen:
- Fig. 1: erste Perspektivansicht auf ein erstes Ausführungsbeispiel eines erfindungsgemäßen Dachziegels;
- Fig. 2: zweite Perspektivansicht auf den Dachziegel der Fig. 1;
- Fig. 3: erste Seitenansicht auf den Dachziegel der Fig. 1 und 2;
- Fig. 4: zweite Seitenansicht auf den Dachziegel der Fig. 1-3;
- Fig. 5: Stapel aus mehreren Dachziegeln der Fig. 1-4;
- Fig. 6: erste Perspektivansicht auf ein zweites Ausführungsbeispiel eines erfindungsgemäßen Dachziegels;
- Fig. 7: zweite Perspektivansicht auf den Dachziegel der Fig. 6;
- Fig. 8: erste Seitenansicht auf den Dachziegel der Fig. 6 und 7;
- Fig. 9: zweite Seitenansicht auf den Dachziegel der Fig. 6-8;
- Fig. 10: Stapel aus mehreren Dachziegeln der Fig. 5-9;
- Fig. 11: Draufsicht auf die Vorderseite eines dritten Ausführungsbeispiels eines erfindungsgemäßen Dachziegels; und
- Fig. 12: Rückansicht des Dachziegels der Fig. 11.

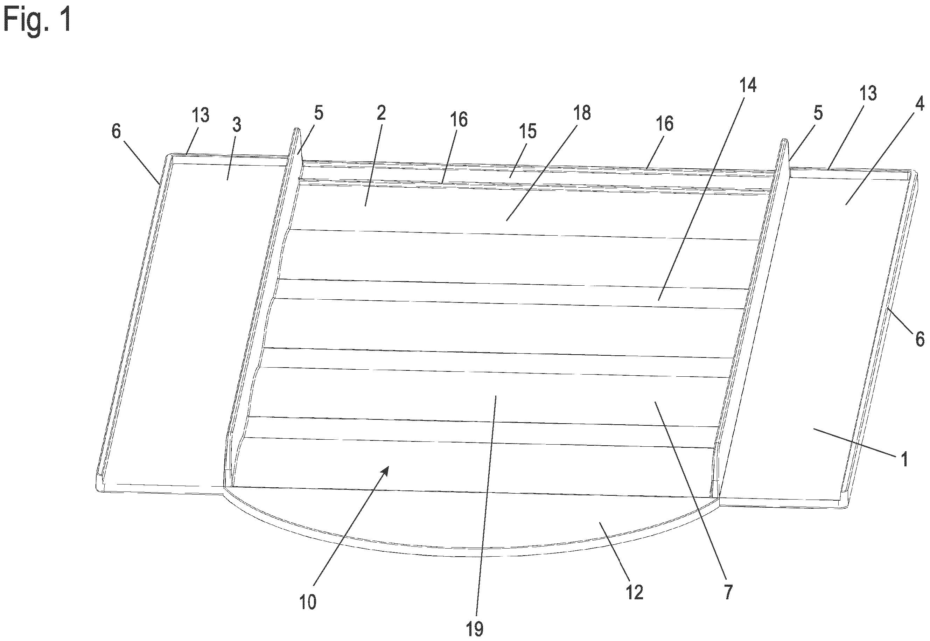

Fig. 1 zeigt einen monolithischen Dachziegel 1 aus einem thermoplastischen Kunststoffmaterial. Dabei ist der Kunststoff-Dachziegel unbeschichtet. Bevorzugt weist der Dachziegel keine weitere Armierung auf.

Das Kunststoffmaterial des monolithischen Dachziegels umfasst zumindest zu 90 Gew.%, vorzugsweise zu mehr als 96 Gew.%, einen UV-beständigen Thermoplasten, vorzugsweise einem UV-beständigen Polyolefin, besonders bevorzugt Polyethylen. Vorzugsweise besteht der Dachziegel aus einem sortenreinen Kunststoff, besonders bevorzugt aus Polyethylen.

Besonders bevorzugt kann zumindest ein Teil, vorzugsweise mehr als 30 Gew.%, des Kunststoffmaterial des monolithischen Dachziegels aus einem rezyklierten Kunststoff, insbesondere aus recyclierten Polyethylen, sogenanntem rPE, bestehen. Rezyklierte Kunststoffe sind u.a. in den Normen DIN EN 15347:2007 und DIN EN 15347:2008-02 definiert.

Vorzugsweise kann der gesamte Dachziegel vollständig aus einem rezyklierten Kunststoff, insbesondere aus rPE, bestehen. Ein rezyklierter Kunststoff kann beispielsweise durch den Anteil an thermische Abbauprodukte und anhand des Vernetzungsgrades definiert werden. Ein "virgin-Kunststoff" ist weniger vernetzt und weist weniger Abbauprodukte unter analoger Herstellungsbedingungen auf. Durch nochmaliges Ausformen durch Aufschmelzen weisen Kunststoffobjekte ab einem bestimmten Anteil an rezyklierten Kunststoff immer deutlich mehr thermische Abbauprodukte auf als ein virgin-Material.

Der Dachziegel 1 weist sodann eine Sichtseite 10 auf, welche im bestimmungsgemäßen Gebrauch die Außenfläche eines Dachs bildet, und eine Rückseite 20 auf, welche z.B. auf einer Dachlattung aufliegen kann.

Der minimale Abstand d zwischen der Sichtseite 10 und der Rückseite 20 beträgt weniger als 9 mm, vorzugsweise weniger als 5 mm, besonders bevorzugt zwischen 2-4 mm, weiter bevorzugt zwischen 2,4-3,5 mm.

Der Dachziegel 1 ist plattenförmig ausgebildet. Er weist eine Sichtfläche 10 auf, die im bestimmungsgemäßen Gebrauch einen unüberdeckten Mittelbereich 2 aufweist und zwei flache Auflagebereiche 3 und 4, welche zumindest teilweise mit benachbarten Ziegeln überdeckt sind.

Die Auflagebereiche 3 und 4 und der Mittelbereich 2 sind durch eine Trennleiste 5 voneinander abgegrenzt. Die Trennleiste 5 dient als seitlicher Begrenzungsanschlag für zwei benachbarte Ziegel. Die Trennleiste 5 steht vorzugsweise um zumindest 5 mm, vorzugsweise um mehr als 8 mm, gegenüber dem Mittelbereich 2 hervor.

Die Auflagebereiche 3 und 4 sind rinnenförmig als Ablaufkanal ausgebildet, welche durch die Trennleiste 5 begrenzt sind. Dies ermöglicht eine Ableitung von Regen- und/oder Tauwasser und dergleichen aus den Auflagebereichen 3 und 4. Einseitig endständig weist diese Aufführungsvariante eine gegenüber dem Auflagebereich 3 oder 4 hervorstehende Kante 13 auf, während die weitere endständige Seite für den Ablauf von Wasser offen ist.

Der Mittelbereich 2 weist eine Biegeversteifung 7 auf. Die Biegeversteifung 7 wird durch eine oder mehrere hintereinander angeordnete Versteifungsbögen 19 ausgebildet, welche sich quer, vorzugsweise senkrecht, zur Längsachse des Dachziegels 1 erstrecken. Zwischen den Versteifungsbögen 19 sind plattenförmige Verbindungsstege 14 ausgebildet. Die Außenfläche der Verbindungsstege 14 sind auf einer gemeinsamen Ebene angeordnet. Endständig wiest der Dachziegel 1 einen Bogenplattenabschnitt 12 auf, wodurch der Dachziegel 1 als ein Biberschwanz-Ziegel definiert ist.

Die Versteifungsbögen 19 weist eine um zumindest 50%, vorzugsweise eine zumindest 80%, erhöhte Dicke auf als die Plattendicke d. Besonders bevorzugt können die Versteifungsbögen zumindest eine Dicke von 4,5 mm, vorzugsweise zwischen 5-6 mm, aufweisen.

Randseitig, z.B. auf dem entgegengesetzten Rand des Bogenplattenabschnitts 12, weist der Dachziegel 1 eine Dichtnut 15 auf, die schräg, insbesondere senkrecht, zur Längsachse A des Dachziegels 1 verläuft.

Die Dichtnut 15 wird randseitig durch zwei leistenförmige Erhebungen 16 begrenzt. Die Dichtnut 15 weist einen flachen Nutboden auf, welcher eine ebene Positionierung eines nicht-dargestellten komprimierbaren Dichtungsbands, im Bausektor auch verkürzt als Kompri-Band bekannt, vorzugsweise eines Schaum-Dichtbands, erlaubt. Das besagte Dichtungsband kann durch Aufquellen bzw. Expansion auf zumindest 20 mm, vorzugsweise auf zumindest 35 mm-40 mm expandieren.

Der Dachziegel 1 kann eines oder mehrere Löcher 18, z.B. Bohrungen, aufweisen, welche ein Verschrauben mit einer darunterliegenden Lattung erlauben. Die Fixierung erfolgt somit nicht durch Adhäsion, sondern rein mechanisch durch Einhaken und optional durch zusätzliches Verschrauben.

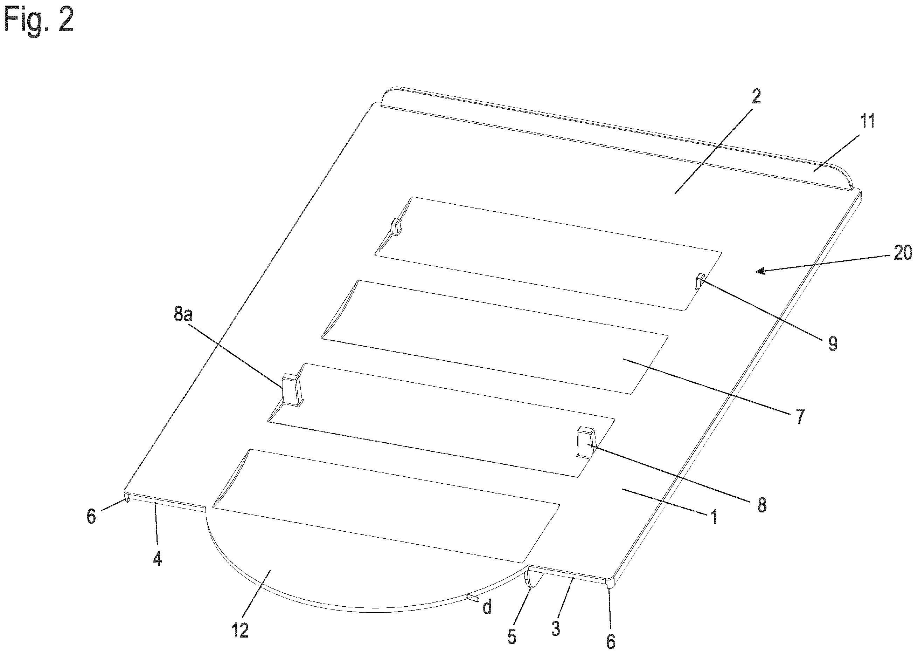

Fig. 2 zeigt die Rückseite 20 des Dachziegels 1. In einem Randbereich des Dachziegels ist eine Fixierleiste 11 angeordnet, welche gegenüber der benachbarten Oberfläche hervorsteht und welche zur mechanischen Fixierung, vorzugsweise zum Einhaken bzw. zum Hintergreifen, des Dachziegels 1 an einer Dachlatte vorgesehen ist.

Die Fixierleiste 11 erstreckt sich schräg, insbesondere senkrecht zur Längsachse A des Dachziegels 1. Er erstreckt sich in der in Fig. 2 dargestellten Ausführungsvariante über zumindest 90%, vorzugsweise zumindest 95% der Breite des Dachziegels 1. Der Mittelbereich der Rückseite weist im Bereich der Versteifungsbögen 19 Vertiefungen auf. Randseitig gegenüber dem Mittelbereich 2 weist die Rückseite 20 zwei ebene Bereiche gegenüberliegend zu den Auflagenbereichen 3 und 4 der Sichtseite 10 auf. Diese liegen auf einer Ebene mit den Zwischenbereichen der Mittelebene 2 zwischen den vorgenannten Vertiefungen.

Weiterhin weist die Rückseite 20 einen oder mehrere turmartige Vorsprünge 8 und 9 auf, welche senkrecht gegenüber der rückseitigen Ebene des Mittelbereichs 2 hervorstehen. Einer oder mehrere der Vorsprünge 8 und 9 weisen zumindest eine gegenüber der senkrechten Ausrichtung der Vorsprünge 8 und 9 angeschrägte Führungsfläche 8a auf, so dass sie sich ausgehend von einem Ansatz am Mittelbereich 2 zum freien Ende hin verjüngen.

In der Variante der Fig. 2 liegen zwei Vorsprünge 8 und 9 auf einer ersten gemeinsamen Achse, die parallel zur Längsachse A des Dachziegels A verläuft. Parallel zu dieser ersten gemeinsamen Achse ist eine zweite Achse vorgesehen, auf welcher ebenfalls zwei Vorsprünge 8 und 9 angeordnet sind.

Die Vorsprünge 8 oder 9 spiegelsymmetrisch zueinander mit einer Spiegelebene durch eine mittige Schnittebene des Dachziegels angeordnet und ausgebildet. Dabei weist ein erster Vorsprung 8 auf der ersten gemeinsamen Achse einem Rechteckquerschnitt mit einer geringeren Längenerstreckung parallel zur Längsachse A des Ziegels gegenüber einer Breitenerstreckung senkrecht dazu auf. Demgegenüber weist ein zweiter Vorsprung 9 auf der ersten gemeinsamen Achse einem Rechteckquerschnitt mit einer größeren Längenerstreckung parallel zur Längsachse A des Ziegels gegenüber einer Breitenerstreckung senkrecht dazu auf.

Die Höhe der beiden Vorsprünge 8 und 9 einer gemeinsamen Achse ist verschieden. Der Vorsprung 8, welcher weiter von der Fixierleiste 11 entfernt ist, weist eine größere Höhe, vorzugsweise eine um 50-300% größere Höhe gegenüber dem Vorsprung 9, welcher näher zur Fixierleiste 11 angeordnet ist.

Die Vorsprünge 8 und 9 dienen u.a. als Positionierhilfen zur besseren Stapelung der Dachziegel 1 übereinander.

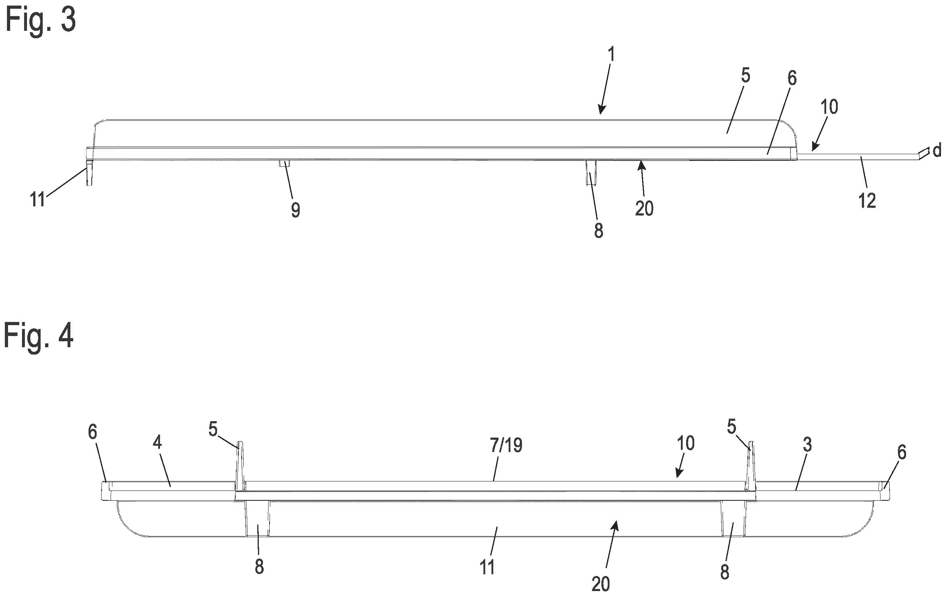

Fig. 3 zeigt eine Seitenansicht entlang der Längsachse A des Dachziegels 1. Der leistennahe Vorsprung 9, vorzugsweise beide leistennahen Vorsprünge 9, weist eine Höhe zwischen 70-150% der Plattendicke bzw. des Abstands d auf. Der leistenferne Vorsprung 8, vorzugsweise beide leistenfernen Vorsprünge 8, hingegen weist eine Höhe zwischen 200-600% der Plattendicke d auf.

Die den rinnenförmigen Ablaufkanal begrenzende äußere hervorstehende leistenförmige Kante 6 weist eine Höhe von zumindest 50%, vorzugsweise 60-150% der Plattendicke d auf.

Die Trennleiste 5 und/oder die in entgegengesetzter Richtung hervorstehende Fixierleiste 11 hingegen weist eine Höhe von mehr als 300%, vorzugsweise das 3,5-12-fache der Plattendicke d auf.

Fig. 4 zeigt eine Seitenansicht senkrecht zur Längsachse A des Dachziegels 1 ausgehend vom Bodenplattenabschnitt 12 bis zur Fixierleiste 11. Man erkennt aus dieser Figur insbesondere die Erhebung der Biegeversteifung 7 gegenüber den benachbarten Bereichen, z.B. den Verbindungsstegen 14 und dem Bogenplattenabschnitt 12 als auch der Auflagenbereiche 3 und 4, welche eine gemeinsame ebene Oberfläche ausbilden. Insbesondere liegen die Stirnflächen der Biegeversteifung und der Kante 6 auf einer gemeinsamen Ebene.

Die Biegeversteifung 7, z.B. die Versteifungsbögen 19, stehen mit einer Höhe von zumindest 50%, vorzugsweise 60-150% der Plattendicke d gegenüber einer dazu benachbarten Fläche hervor.

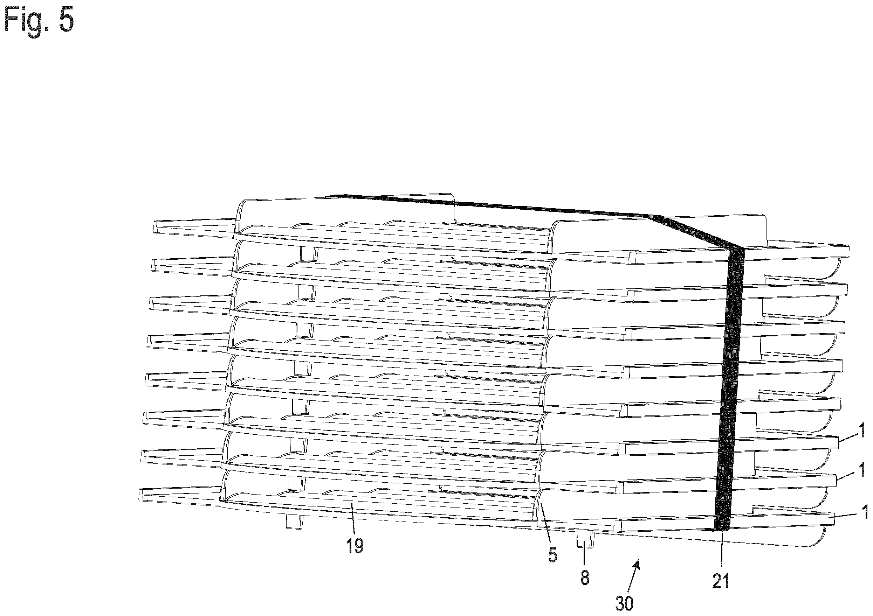

Fig. 5 weist einen Stapel 30 aus mehreren Dachziegeln 1 auf. Dabei sind die Oberseiten 10 stets in der gleichen Richtung ausgerichtet.

Aus Fig. 5 ist erkennbar, dass die Höhe der Trennleiste 5 größer ist als die Höhe der Vorsprünge 8 in entgegengesetzte Richtung. Dadurch setzen die Vorsprünge im Stapel nicht auf den benachbarten Dachziegeln 1 auf.

Man erkennt, dass die Vorsprünge 8 und 9 ein seitliches Verschieben der Dachziegel 1 gegeneinander verhindern. Die Führungsfläche 8 dient einer Erleichterung bei der Stapelung der Dachziegel 1. Der Stapel 30 wird durch ein Halteband 21 fixiert.

Die Lieferung des Stapels 30 erfolgt sodann in umweltfreundlicher Weise unverpackt, also ohne einen zusätzlichen Karton.

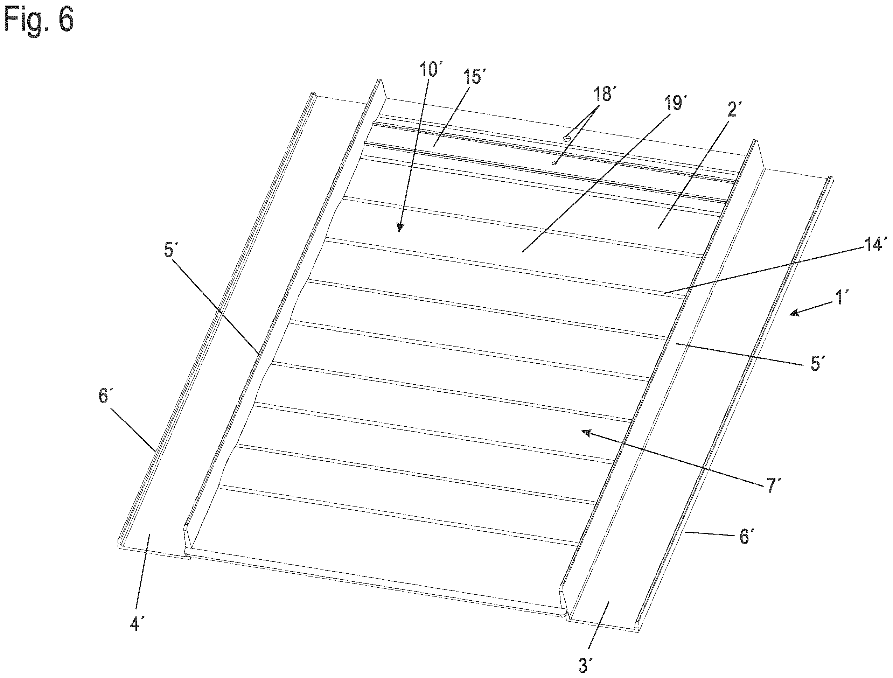

Fig. 6-10 zeigen eine zweite Variante an Dachziegel 1'. Analog zu Fig. 1-5 weist dieser Dachziegel 1' einen Mittelbereich auf, in welchem eine Biegeversteifung 7' angeordnet ist. Darüber hinaus weist der Dachziegel 1' ebenfalls analog zu Fig. 1-5 zwei parallel zur Längsachse A verlaufende Auflagebereiche 3' und 4' auf, welche als Ablaufrinne ausgebildet sind und welche durch eine Trennleiste 5 zum Mittelbereich hin und durch eine leistenförmige Kante 6' begrenzt ist.

Ebenfalls ist in einem Endbereich, insbesondere auf der Seite einer Fixierleiste 11', eine Dichtnut 15', ebenfalls analog zur Variante der Fig. 1-5 angeordnet. In diesem Endbereich kann eine oder mehrere Löcher 18' für eine Schraubfixierung des Dachziegels 1' an einer Dachlatte angeordnet sein.

Auch in diesem Fall ist die Biegeversteifung 7' in Form von Versteifungsbögen 19' ausgebildet mit dem Unterschied, dass die Versteifungsbögen einen geringeren Abstand zueinander aufweisen. Die ermöglicht eine höhere Biegesteifigkeit. Zusätzlich wird die Biegesteifigkeit des Dachziegels durch eine rückseitige zweite Biegeversteifung 22 unterstützt.

Während die sichtseitige Biegeversteifung 7' vorrangig senkrecht zur Längserstreckung wirkt, ermöglicht die rückseitige Biegeversteifung 22 eine erhöhte Biegesteifigkeit des Dachziegels sowohl in Längsrichtung als auch senkrecht dazu. Hierfür ist eine Anordnung aus mehreren zueinander benachbarten, insbesondere unmittelbar benachbarten, Zellen 23 vorgesehen. Die Anordnung umfasst vorzugsweise zumindest 20, vorzugsweise zumindest 40 Zellen.

Die Zellwände 24 zwischen zwei Zellen 23 weisen eine Zellwandstärke auf, welche vorzugsweise gleich oder besonders bevorzugt geringer ist als die minimale Plattenstärke d. Die weiteren Angaben zur Dimension einzelner Elemente des Dachziegels sind analog zur Fig. 1-5.

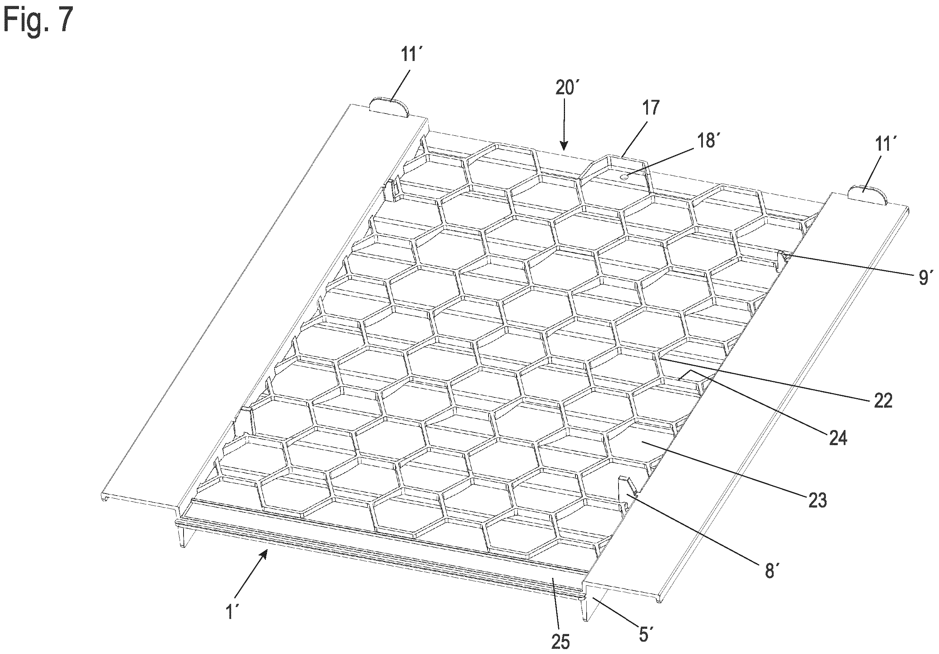

Die Zellen sind als Hohlkammerzellen aufgebaut und weisen in Fig. 7 eine hexagonale Form auf, analog zu einer Bienenwabe.

Die Zellen können auch andere Formen, z.B. Rechteckform, Dreieckform, Lochkreise oder dergleichen aufweisen. Alle diese Formen bzw. Strukturen aus mehreren Zellen können aufgrund ihrer unmittelbar benachbarten Anordnung im Rahmen der vorliegenden Erfindung als Wabenform bezeichnet werden.

Die Fixierleiste zum Einhaken an einer Dachlattung wird in dieser Variante durch zwei Fixierleisten 11' ersetzt, die auf einer gemeinsamen Achse senkrecht zur Längsrichtung A des Dachziegels 1' liegen. Die Fixierleisten sind endständig an einem rückseitigen Bereich der Auflagenbereiche 3' und 4' angeordnet. Zur mittleren Abstützung des Dachziegels zwischen den Fixierleisten 11' ist eine Zellwandungsabschnitt gegenüber den Zellwandungen 24 der benachbarten Zellen erhaben ausgebildet, so dass dieser auf einer Höhe mit den rückseitgen Flächen der Auflagenbereiche 3' und 4' liegt und somit eine zusätzliche Auflagenkante 17 bereitstellt.

Ein weiterer Unterschied zur Variante der Fig. 1-5 ist die Anordnung einer weiteren Dichtungsnut 25 auf der Rückseite 20 des Dachziegels 1. Die Dichtungsnut 25 ist in einem fixierleistenfernen Endbereich des Dachziegels mittig angeordnet. Auch in diese Dichtleiste kann ein komprimierbares Dichtungsband eingesetzt werden.

Analog zur Fig. 1-5 weist auch in dieser Variante die Rückseite Vorsprünge 8' und 9' für eine besseren Stapelbarkeit und Zentrierung der Dachziegel im gebündelten Stapel 30' auf. Die Führungsflächen 26 der Vorsprünge 8' und 9' weisen dabei einen deutlich stärkeren Anstellwinkel auf.

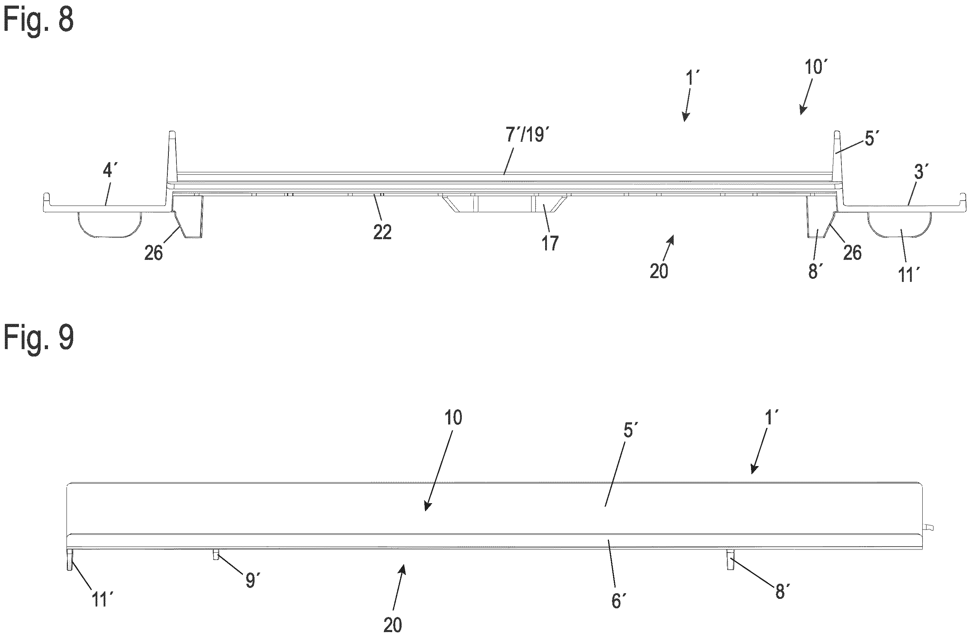

Aus der Seitenansicht der Fig. 8 und 9 sind die Höhen der einzelnen Elemente des Dachziegels 1' erkennbar. Bevorzugt entspricht die Höhe der Biegeversteifung 22, abgesehen von dem Bereich in der Nähe der Auflagenkante 17, etwa 40-120% der Plattendicke d.

Demgegenüber steht die Auflagenkante 17 um zumindest das Doppelte, vorzugsweise das Dreifache der Plattendicke gegenüber der Stirnseite einer weiteren oder mehrerer weiterer Zellenwände 24 hervor.

Ein weiterer Unterschied ergibt sich bei der Betrachtung der Fig. 8. Während die rückseitigen Flächen der Auflagenbereiche 3 und 4 in Fig. 4 mit der rückseitigen Oberfläche der Verbindungsstege 14 auf einer Ebene liegen, so steht die jeweilige rückseitige Fläche des Auflagenbereichs 3' oder 4' gegenüber der rückseitigen Ebene der Verbindungsstege 14 und vorzugsweise auch gegenüber den Stirnflächen der Zellwände 24 hervor, so dass eine zusätzliche randseitige Versteifung in Längsrichtung erreicht wird.

Der Boden des Ablaufkanals liegt somit von der Sichtseite 10 aus betrachtet unterhalb der vorgenannten rückseitigen Ebenen der Zellböden der Zellen 23 und vorzugsweise auch unterhalb der Stirnflächen der Zellwände 24.

Die Vorsprünge 8, 9 können bereichsweise stoffschlüssig an einer den Ablaufkanal begrenzende Wandung angeordnet sein, wodurch eine zusätzliche Stabilität des Vorsprungs und der Wandung gegen Verformung und/oder thermischen Verzug erreicht wird.

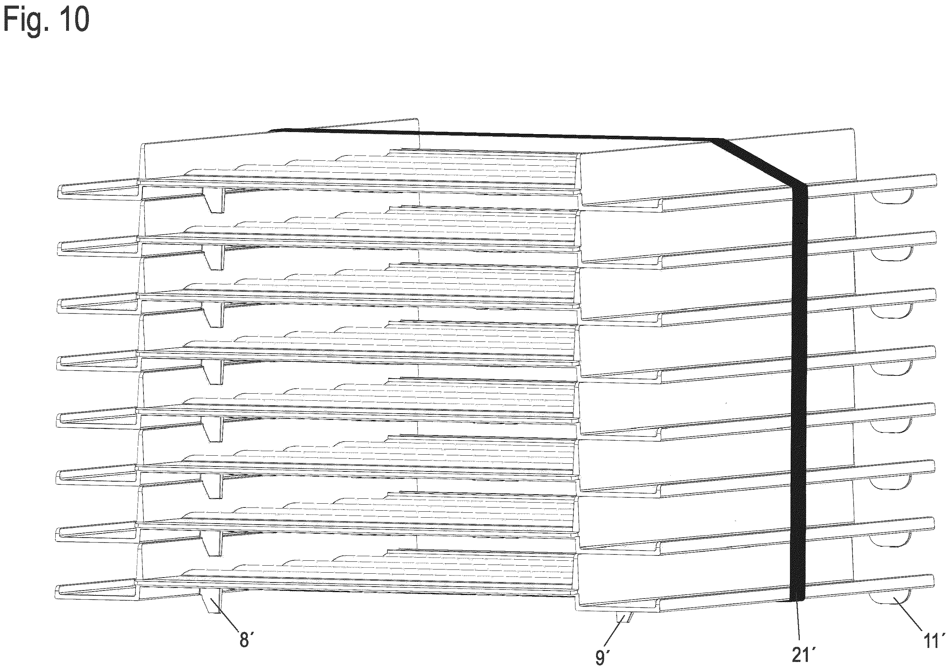

Fig. 10 zeigt sodann einen Stapel 30'. Wie bereits in Fig. 5 erfolgt die Auflage der Dachziegel 1 und 1' untereinander entlang der Stirnflächen der Trennleisten 5, 5'.

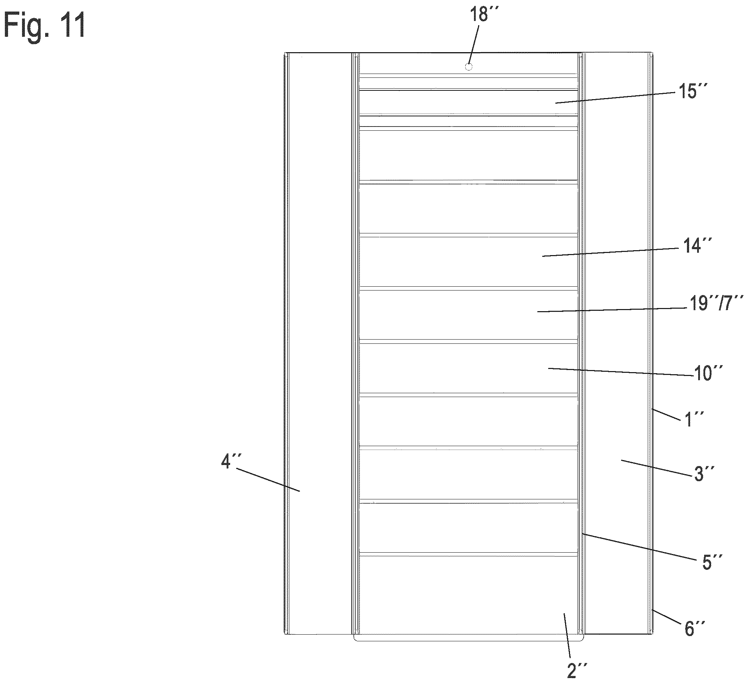

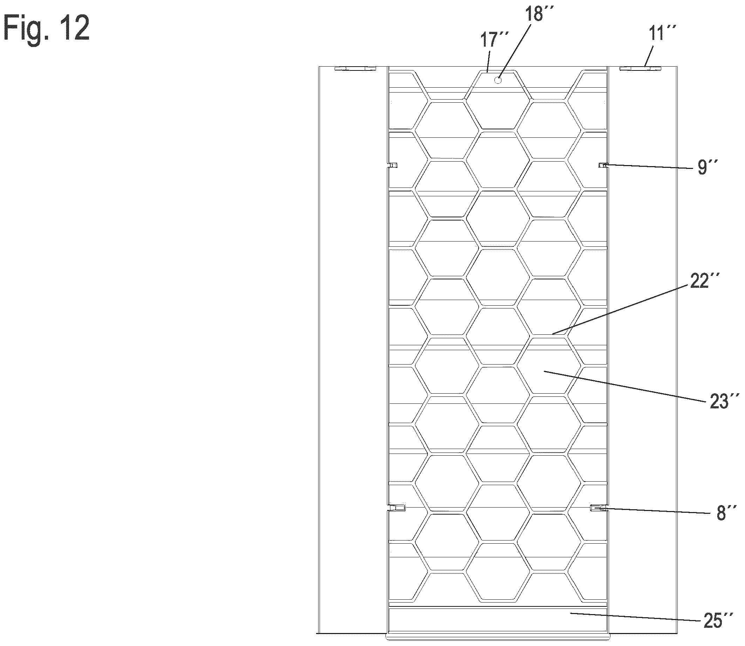

Fig. 11 und 12 zeigen eine weitere Ausführungsvariante der Erfindung in Abwandlung der beiden Dachziegel der Fig. 1-10.

Es wurden analoge Bezugszeichen wie in Fig. 1-10 für analoge und funktionsgleiche Bauelemente der Dachziegel 1, 1' angegeben. Der Unterschied besteht einerseits in der geringeren Breite des Mittelsegments und in dem Abstand der Versteifungsbögen 19'.

Die Kunststoff-Ziegel sind aus einem 100% rezyklierbaren Material fertigbar.

Die Kunststoff-Ziegel sind in mehreren Farben, insbesondere in anthrazit und/oder ziegelrot verfügbar.

### Bezugszeichen

- 1 1' 1": Dachziegel
- 2 2' 2": Mittelbereich
- 3 3' 3": Auflagebereich
- 4 4' 4": Auflagebereich
- 5 5' 5": Trennleiste
- 6 6' 6": leistenförmige Kante
- 7 7' 7": Biegeversteifung
- 8 8' 8": Vorsprung
- 8a: Führungsfläche
- 9 9' 9": Vorsprung
- 10 10' 10": Sichtseite
- 11 11' 11": Fixierleiste
- 12: Bogenplattenabschnitt
- 13: Kante
- 14 14' 14": Verbindungssteg
- 15 15' 15": Dichtnut
- 16 16': leistenförmige Erhebung
- 17 17": Auflagekante
- 18 18' 18": Loch
- 19 19' 19": Versteifungsbogen
- 20: Rückseite
- 21 21': Halteband
- 22 22": Biegeversteifung
- 23 23": Zellen
- 24: Zellwand
- 25 25": Dichtungsnut
- 26: Führungsfläche

- 30: Stapel

- d: Plattendicke
- A: Längsachse

## Patentansprüche

1. Kunststoff-Dachziegel (1, 1', 1") umfassend einen monolithischen spritzgegossenen plattenförmigen Kunststoffkörper, welcher zu mehr 80 Gew.% aus einem thermoplastischen Polymer gebildet ist.

2. Kunststoff-Dachziegel nach Anspruch 1, **dadurch gekennzeichnet, dass** der Kunststoff-Dachziegel ausschließlich aus dem Kunststoffkörper gebildet ist, wobei der Kunststoff-Dachziegel (1, 1', 1") vorzugsweise beschichtungsfrei ausgebildet ist.

3. Kunststoff-Dachziegel nach Anspruch 1 oder 2, **dadurch gekennzeichnet, dass** der Kunststoffkörper einen Mittelbereich (2., 2', 2") mit einer Biegeversteifung (7, 7', 7", 22, 22") zur Erhöhung der Biegesteifigkeit senkrecht zur Längsrichtung des Kunststoff-Dachziegels (1, 1', 1") aufweist.

4. Kunststoff-Dachziegel nach Anspruch 1, 2 oder 3, **dadurch gekennzeichnet, dass** der Kunststoff-Dachziegel (1, 1', 1") randseitig zum Mittelbereich (2, 2', 2") zumindest einen, vorzugsweise zwei, parallel zur Längsachse (A) des Kunststoff-Dachziegels (1, 1', 1") angeordnete Auflagebereiche (3, 4, 3', 4', 3", 4") zur zumindest bereichsweisen Auflage und Überdeckung von benachbarten Ziegeln aufweist, welche jeweils durch eine Trennleiste (, 5', 5") gegenüber dem Mittelbereich (2, 2', 2") abgegrenzt ist.

5. Kunststoff-Dachziegel nach einem der vorhergehenden Ansprüche, **dadurch gekennzeichnet, dass** der jeweilige Auflagebereich (3, 4, 3', 4', 3", 4") als rinnenförmiger Ablaufkanal ausgebildet ist, welcher durch die Trennleiste (5, 5', 5") und eine randseitige leistenförmige Kante (6, 6', 6") begrenzt ist.

6. Kunststoff-Dachziegel nach einem der vorhergehenden Ansprüche, **dadurch gekennzeichnet, dass** der minimale Abstand (d) zwischen einer Sichtseite (10, 10', 10") und einer Rückseite (20) des Dachziegels (1, 1', 1") weniger als 9 mm, vorzugsweise weniger als 5 mm, besonders bevorzugt zwischen 2-4 mm, weiter bevorzugt zwischen 2,4-3,5 mm, beträgt.

7. Kunststoff-Dachziegel nach einem der vorhergehenden Ansprüche, **dadurch gekennzeichnet, dass** der Mittelbereich (2, 2', 2") als Sichtbereich der Sichtseite (10, 10', 10") ausgebildet ist, wobei besonders bevorzugt die Biegeversteifung (7, 7', 7", 22, 22") optisch wahrnehmbar im Mittelbereich (2, 2', 2") der Sichtseite (10, 10'. 10") angeordnet ist.

8. Kunststoff-Dachziegel nach einem der vorhergehenden Ansprüche, **dadurch gekennzeichnet, dass** der Kunststoff-Dachziegel (1, 1', 1") entlang einer Rückseite (20) eine Fixierleiste (11, 11', 11") zum Einhaken an einer Dachlattung aufweist.

9. Kunststoff-Dachziegel nach einem der vorhergehenden Ansprüche, **dadurch gekennzeichnet, dass** der Kunststoff-Dachziegel (1, 1', 1") entlang der Rückseite (20) zumindest einen Vorsprung (8, 8', 8", 9', 9', 9"), vorzugsweise mehrere Vorsprünge (8, 8', 8", 9', 9', 9") entlang einer ersten Achse und zumindest einen zweiten Vorsprung (8, 8', 8", 9', 9', 9"), vorzugsweise mehrere Vorsprünge entlang einer zweiten Achse aufweist, wobei die erste Achse und die zweite Achse parallel zueinander und parallel zur Längsachse des Kunststoff-Dachziegels (1, 1', 1") angeordnet sind.

10. Kunststoff-Dachziegel nach einem der vorhergehenden Ansprüche, **dadurch gekennzeichnet, dass** der Kunststoff-Dachziegel (1, 1', 1") einen Versteifungsbogen (19, 19', 19") als Teil einer Biegeversteifung (7, 7', 7") und/oder eine Anordnung aus mehreren nebeneinander angeordneten Zellen (23, 23") als Teil einer Biegeversteifung (22, 22")aufweist, wobei besonders bevorzugt eine erste Biegeversteifung (7, 7', 7") entlang der Sichtseite (10, 10', 10") angeordnet ist und eine zweite Biegeversteifung (22, 22") entlang der Rückseite (20) angeordnet sind.

11. Kunststoff-Dachziegel nach einem der vorhergehenden Ansprüche, **dadurch gekennzeichnet, dass** das thermoplastische Polymer als Polyethylen und/oder Polypropylen ausgebildet ist.

12. Kunststoff-Dachziegel nach einem der vorhergehenden Ansprüche, **dadurch gekennzeichnet, dass** das thermoplastische Polymer zumindest zu 30 Gew.% einen rezyklierten Kunststoff aufweist oder dass der Dachziegel besonders bevorzugt zu mehr als 99 Gew.% aus einem rezyklierten Kunststoffmaterial besteht.

13. Verwendung eines Kunststoff-Dachziegels (1, 1', 1") nach einem der vorhergehenden Ansprüche, als Teil einer Fixierungsvorrichtung, insbesondere als Ersatz-Ziegel, zur Festlegung eines Photovoltaikmodul und/oder eines Solarmoduls auf einem Dach.

14. Verfahren zur Herstellung eines Kunststoff-Dachziegels (1, 1', 1"), insbesondere nach einem der vorhergehenden Ansprüche, **dadurch gekennzeichnet, dass** der Kunststoff-Dachziegel (1, 1', 1") in einem einstufigen Spritzguss-Prozess, insbesondere als Einkomponenten-Spritzguss, insbesondere unter Ausbildung eines 3-dimensionalen biegesteifen Ersatzziegels, hergestellt wird.

15. Verfahren zur Bereitstellung eines Stapels (30, 30', 30") aus Kunststoff-Dachziegeln (1, 1', 1"), vorzugsweise aus Kunststoff-Dachziegeln nach einem der vorhergehenden Ansprüche, ausschließlich bestehend aus den Schritten:
A Spritzgießen, insbesondere einstufiges Spritzgießen, der Kunststoff-Dachziegel (1, 1', 1");
B Stapeln der Kunststoff-Dachziegel (1, 1', 1"); und
C Bündeln der Kunststoff-Dachziegel (1, 1', 1").
